# EUROPEAN PATENT APPLICATION

(11) **EP 1 672 471 A1**
(43) Date of publication of application: **21.06.2006**
(21) Application number: 04447275.1
(22) Date of filing: 14.12.2004
(51) Int. Cl.: G06F 3/033

(54) **Content playback device with touch screen**

(71) Applicant: Thomson Multimedia Broadband Belgium, 2650 Edegem (BE)
(72) Inventor: Muylkens, Koen, 2811 Hombeek (BE); Rosseel, Jan, 3270 Scherpenheuvel-Zichem (BE)
(74) Representative: Kohrs, Martin

(57) **Abstract**

The invention concerns a content playback device (1) comprising a touch-sensitive surface (3) superposed with an integrated display (2) the first display (2) can be disabled and wherein the touch-sensitive surface (3) and control means cooperate to provide user control functions of content playback independently of whether the display is enabled or disabled. The invention also concerns methods for controlling playback content, and in particular a method according to which both touch screen position dependent function selection and one position independent function selection are used in conjunction with the same playback device.

## Description

The invention concerns a media player device, such as a handheld personal audio and/or video player/recorder with incorporated display, and methods for controlling the playback of audio/video programs and/or slideshows on and from this device. The device and methods can be employed in particular within a wireless environment, such as a wireless local network; it is however not limited to this context.

The versatility of mobile devices grows with the availability of more storage capacity, greater bandwidth and adapted displays. Optical disk or hard disk based portable media players are now available on the consumer electronics market, integrating LCD displays. Typically, the display is integrated into a hinged flap with can be folded over the device's main body for transportation. The device comprises a number of buttons and controls to enable the user to command a number of different functions related to the audio/video program and/or slideshow playback. For cost reasons and limitation of available space, it is usually desirable to limit the number of buttons and controls. Moreover, mobile devices have to take into account a number of constraints. One of these is the limited autonomy of the portable power source, such as a rechargeable battery. E.g. a portable personal computer will switch off or switch to a low-power mode certain modules such as the hard disk after a certain time in order to save energy.

The invention concerns a content playback device comprising a display and a touch-sensitive surface for providing device controls characterized in that the display and the touch-sensitive surface are superposed; and in that the device further comprises control means for disabling the display while input using the touch-sensitive surface is enabled.

Thus energy may be saved when the display is disabled, while controls remain enabled.

It is also expected from a media player to integrate certain functionalities which go beyond its capability of playing back e.g. video on its display. For example, the user may wish to be able to visualize his video program on an external display, e.g. a television set or a monitor, instead of the small, integrated display.

According to an embodiment of the invention, the device comprises an output to a second display; wherein said control means are programmed to disable the first display when the output to the second display is enabled.

Typically, the second display may be a television or monitor for displaying visual content provided by the inventive device. This visual content may be provided directly under the form of an analog or digital video signal, but also under other appropriate forms, such as compressed video.

Thus the inventive device can be used for control of the content playback, even if video is not displayed on its integrated display. Visual content control functions include e.g. pause/play, next chapter/picture/movie/video file, previous chapter/picture/movie/video file, fast forward, fast reverse etc... Visual content may comprise video programmes per se (movies, TV show, personal video...) with or without associated audio, or slideshows, or individual pictures etc...

Preferably, the input required to select a given control function is independent of the position of the user's input on the screen, whether the device's display is enabled or not, when visual content (such as a video, a slideshow, pictures etc...) is displayed on any display.
Alternatively, the selection independent of the position of the input is activated when the device's own display is disabled.

The invention also concerns a method for controlling a content playback device comprising a display and a touch-sensitive surface for content playback control, characterized in that, the display and the touch-sensitive surface being superposed, the method comprises the steps of:
- disabling the display;
- enabling the touch-sensitive surface for permitting content playback control while the display is disabled.

Alternatively, the invention concerns a method for controlling a content playback device comprising a display and a touch-sensitive surface, characterized in that, the display and the touch-sensitive surface being superposed, the method comprises the steps of:
- providing first control function selection as a function of the position of the input on the touch-sensitive surface,
- providing second control function selection independently of the position of the user input on the touch-sensitive surface.

A non-restricting embodiment of the invention will now be described with reference to the drawings, among which
figure 1 represents an external view of the device according to the embodiment,
figure 2 is a state diagram illustrating the control states of a video program according to the embodiment, and
figures 3a to 3c represent the device's screen at certain states within the context of the embodiment.

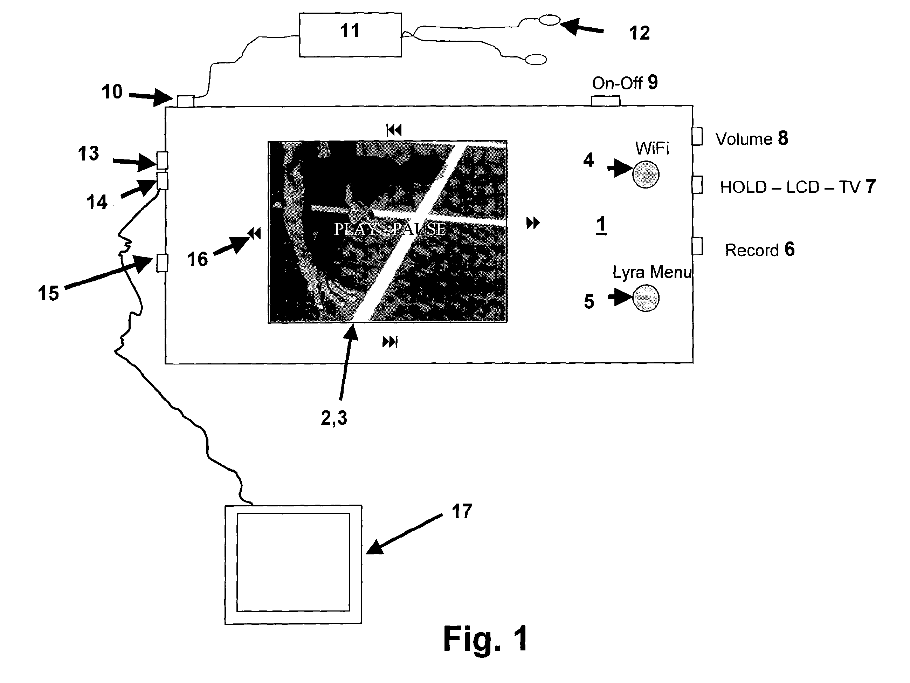

Figure 1 is a schematic representation of a portable video player 1. The device comprises an LCD screen 2 covered by a transparent touch-sensitive surface 3, a wireless connexion push button 4 ('Wifi') for triggering a wireless network search, a menu push button 5 for calling the top-level control menu on the display, a volume control 8, a three-position sliding button HOLD/LCD/TV 7 the use of which will be explained later on, a record push button 6 as well as a power on/off button 9. The device furthermore comprises a headset plug 10 for connecting a remote control 11 and a headset proper 12, a video in plug 13, a video out plug 14, and a Universal Serial Bus (USB) plug 15. The placing of the different buttons, connectors and controls is indicative only.
The device includes a touch sensitive surface for allowing flexible user input while reducing the overall number of buttons. The touch sensitive surface is in itself known, and can be manufactured according to a number of technologies, among which resistive technologies and capacitive technologies. Resistive technologies typically respond to pressure exerted on the sensitive surface by any type of object (finger, gloved finger, plastic stylus), while capacitive technologies will respond to finger contact, or contact with specially designed styli. Other technologies are also known, such as surface acoustic wave (SAW) technologies. In any case, the sensitive touch screen will provide the device with whether the surface is touched and with the coordinates of the point of the surface touched by the user, or with the series of coordinates if the user moves his finger or an appropriate object over the screen. Adapted processing means can derive from this information the duration of the touch, and the direction and path of the movement of the object on the surface.
Around screen 2 are arranged a number of stylized drawings such as 16 for reminding the user of the actions to be carried out in order to trigger certain control functions. The functions illustrated on each of the four sides of the screen are fast forward on the right, fast reverse on the left, next chapter (or movie) on the top, previous chapter (or movie) under the bottom. How these indications are related to the movements to be carried out on the sensitive surface will be explained below.
The device comprises a processor for controlling the device's modules, as well as for handling input to and output from the device. The processor in particular handles user input and controls the device's modules and functions in response to this input. It also processes the input to the touch-sensitive surface.
According to the present embodiment, the device comprises a mass storage module in the form of a hard disk drive, which is able to store compressed digital audio and/or video programs, for example programs compressed according to the MPEG 2 or MPEG 4 standards. The device further comprises appropriate audio/video decompression circuitry, as well as video signal processing circuits for controlling either the LCD screen 2 or an external display 17.

The user can select among two outputs for video programs: either the integrated display, or an external display. When the external display is enabled, the integrated display is switched off, in order to save battery life. However, according to the embodiment, certain control functions can still be activated through the touch-sensitive surface even when the integrated display is disabled. These functions are preferably activated in the same way, whether the integrated display is used for displaying a video, or whether the output to the external display is activated.

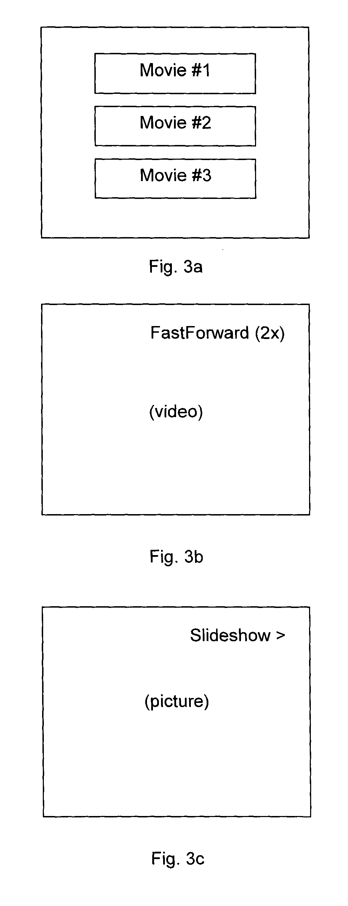

Once the device is turned on, upon activation of the button 5, the device displays, on its integrated screen 2, the top level of the hierarchical menu used to control the device. The user may access the content selection mode, used for selecting content to be reproduced, from this main menu. Figure 3a illustrates an example of a video content selection menu as displayed. Other content selection screens concern e.g. music content and still pictures. Content may be sorted by the user, organized into playlists etc... in conventional manner. The corresponding filtering and ordering functions will not be explained in detail. The default order is that of the directory containing the videos, pictures or audio files.
According to the present embodiment, the menu content selection simply lists available movies.

When in content selection mode, shortly touching ('tapping') a menu item or an icon will select or activate the menu item or icon, depending on the context.
According to the present embodiment, the content selection mode is available only when the integrated display is enabled. In order to enter the content selection mode when video content is displayed on the external display and the integrated display is disabled, the user first has to enable the integrated display by toggling the video output back to that display, using the HOLD-LCD-TV button. The external display is then disabled.

Once a given content has been selected, the device enters into content playing mode.
For control of the content display or playback, five different functions may be activated by the user, each function corresponding to a specific movement or gesture with regard to the touch-sensitive surface. The functions differ according to the context. However, the five movements or gestures remain the same.

The different gestures are as follows:
- Short Tap: Touching the screen for a short period of time;
- Rewind Gesture: Touching the screen and sliding from the right to the left before releasing the screen;
- Forward Gesture: Touching the screen and sliding from the left to the right before releasing the screen;
- Next Track Gesture: Touching the screen and sliding downwards before releasing the screen;
- Previous Track Gesture: Touching the screen and sliding upwards before releasing the screen.

The movements can be performed using the finger or an appropriate object with regard to the particular technology used for the touch-sensitive surface.

It is to be noted that the gestures can be performed anywhere on the touch-sensitive surface. The user consequently does not need to see icons displayed on the integrated display to active the functions - which is of importance if the display is disabled. In the content play mode, the touch controls are not correlated with items (icons, menu items...) displayed on the integrated screen, whereas this is not the case in the content selection mode.

The behaviour generated by carrying out the gestures within each context will now be described.

### (a) Integrated display enabled, external display disabled

### 1. Video

The touch-screen gestures are used to navigate through the video programme. Feedback on the selected control function is given by overlaying an on-screen display message on the displayed video, as illustrated by figure 3b.
- Short Tap: Toggle between Pause and Play
- Rewind Gesture: Fast Rewind video
- Forward Gesture: Fast Forward video
- Next Track Gesture: Play (skip to) next movie in the directory or playlist
- Previous Track Gesture: Play (skip to) previous movie in the directory or playlist.

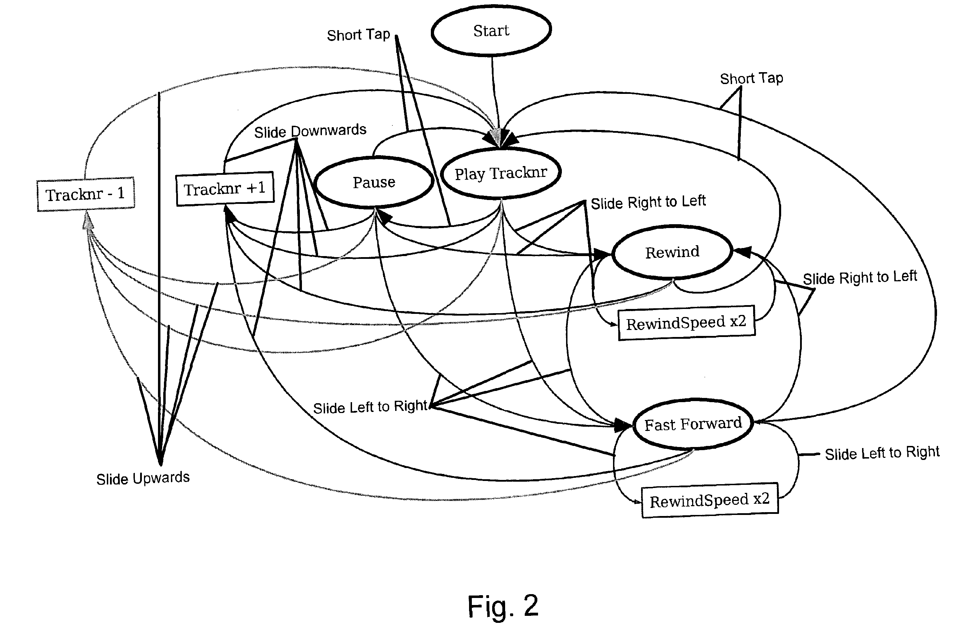

Figure 2 is a state diagram illustrating the behaviour of the device in response to the user's inputs through the touch-sensitive surface.

### 2. Still pictures

The gestures are used to control a slideshow. Feedback is given by overlaying an on-screen display message on the displayed pictures, as illustrated by figure 3c.
- Short Tap: Toggle between pausing and continuing the slideshow
- Next Track Gesture: Triggers (skips to) display of the next picture in the order of the directory or the playlist.
- Previous Track Gesture: Triggers (skips to) display of the previous picture in the order of the directory or the playlist.
- Rewind Gesture: Starts the slideshow in reverse order of the directory or playlist according to which the pictures are organized. A predetermined delay is respected before moving to the next picture. If the gesture is performed again, the delay is divided by two. A short tap reinstates the default delay.
- Forward Gesture: Starts the slideshow in the order of the directory or playlist according to which the pictures are organized. A predetermined delay is respected before moving to the next picture. If the gesture is performed again, the delay is divided by two. A short tap reinstates the default delay.

### 3. Music/Audio files

The integrated display is disabled to save battery life. The gestures are used to navigate through the song directory/playlist or within a song.
- Short Tap: Toggle between pausing and continuing the current song
- Next Track Gesture: Triggers playing of the next song in the order of the directory or the playlist.
- Previous Track Gesture: Triggers playing of the previous song in the order of the directory or the playlist.
- Rewind Gesture: Song is played backwards at double speed. Speed is doubled again if gesture is performed anew. A short tap reinstates normal speed.
- Forward Gesture: Song is played at double speed. Speed is doubled again if gesture is performed anew. A short tap reinstates normal speed.

### (b) Integrated display disabled, external display enabled

The LCD screen is turned off, and the video programme is displayed on the external device. The touch-sensitive surface remains powered and the user uses the same gestures as in (a) to trigger control functions.

The stylized drawings 16 are placed so as to remind the user of the gesture associated with each control function. For instance, the fast forward drawing is placed to the right of the screen to indicate that the gesture required for activating that function comprises moving from the left to the right, while the next track drawing is placed below the screen to indicate that the user has to slide downwards on the screen.

While the main embodiment focuses on the display of visual content, and video in particular, the invention also applies to the case where the device comprises a display which may be disabled or enabled by the user or automatically, even if it does not possess a connector to an external display. This may be the case for an audio player, where the display is switched off to save power. Thus the display may be used in conjunction with the touch screen when certain menu input requires a display (e.g. icons), while the display is switched off during playback per se, the touch screen controls then being active for basic playback control functions.

## Claims

1. Content playback device (1) comprising a display (2) and a touch-sensitive surface (3) allowing selection of content playback control functions **characterized in that**
the display (2) and the touch-sensitive surface (3) are superposed; and **in that**
the device (1) further comprises control means for disabling the display (2) while input for selecting the control functions using the touch-sensitive surface (3) is enabled.

2. Device according to claim 1, further comprising an output (14) to a second display; wherein said control means are programmed to disable the first display when the output to the second display is enabled.

3. Device according to claim 2, wherein the output to the second display is a video signal output and wherein the content comprises at least one among a video, a picture or a slideshow.

4. Device according to one of the claims 1 to 3, wherein the control means are adapted to determine the user-selected control functions independently of the position of the user input on the touch-sensitive surface (3).

5. Device according to one of the claims 1 to 4, wherein the control means are adapted to determine a control function selected by the user as a function of at least one among the duration, the direction and the path of the input of the user on the touch-sensitive surface (3).

6. Device according to claim 4, wherein the control means are adapted to determine user-selected control functions dependent on the position of the user input on the touch-sensitive surface when the display (2) is enabled.

7. Device according to claim 4, wherein the control means are adapted to determine user-selected functions independently of the position of the user input on the touch-sensitive surface when visual content is displayed on the first display (2) or the second display.

8. Method for controlling a content playback device (1) comprising a display (2) and a touch-sensitive surface (3) for content playback control, **characterized in that**, the display and the touch-sensitive surface being superposed, the method comprises the steps of:
- disabling the display (2);
- enabling the touch-sensitive surface (3) for permitting content playback control while the display (2) is disabled.

9. Method according to claim 8, wherein determination of a content playback control function is independent of the position of the user's input on the touch-sensitive surface.

10. Method according to claim 9, further comprising the step of determining a content playback control function as a function of at least one among the duration, direction and path of a user input on the touch-sensitive surface.

11. Method according to one of the claims 8 to 10, wherein the device comprises an output (14) to a second display for displaying content, further comprising the step of disabling the first display (2) in response to enabling the output (14) to the second display.

12. Method according to one of the claims 8 to 11, wherein said content comprises at least one among video, slideshow and picture.

13. Method according to claim 11, further comprising the step of determining content playback control functions independently of the position of the user input on the touch-sensitive surface during playback of visual content.

14. Method for controlling a content playback device (1) comprising a display (2) and a touch-sensitive surface (3), **characterized in that**, the display and the touch-sensitive surface being superposed, the method comprises the steps of:
- providing first control function selection as a function of the position of the input on the touch-sensitive surface (3),
- providing second control function selection independently of the position of the user input on the touch-sensitive surface (3).

15. Method according to claim 14, wherein said first control function selection is preceded by the display of visual information identifying the position of input of control functions.

16. Method according to claims 14 or 15, wherein said second control function selection is used during content playback.

17. Method according to one of the claims 14 to 16, wherein said position independent control function selection comprises determination of a control function as a function of duration, direction and path of a user input on the touch-sensitive surface.
